# FASCICULE DE BREVET EUROPEEN

(11) **EP 1 289 795 B1**
(45) Date de publication et mention de la délivrance du brevet: **25.10.2006**
(21) Numéro de dépôt: 01940649.5
(22) Date de dépôt: 31.05.2001
(51) Int. Cl.: B60N 3/04

(54) **TAPIS DE PROTECTION ET/OU DECORATION, NOTAMMENT DESTINE A EQUIPER UN VEHICULE AUTOMOBILE**
SCHUTZ- UND/ODER ZIERMATTE, INSBESONDERE ZUR AUSRÜSTUNG EINES KRAFTFAHRZEUGES BESTIMMT
PROTECTIVE AND/OR DECORATIVE MAT FOR EQUIPPING A MOTOR VEHICLE

(30) Priorité: 09.06.2000 FR 0007412; 08.09.2000 FR 0011489
(43) Date de publication de la demande: 12.03.2003
(73) Titulaire: HOLDING SWEETCO, Société par Actions Simplifiée, 59115 Leers (FR)
(72) Inventeur: ROOM, Thierry, F-59300 Valenciennes (FR)
(74) Mandataire: Duthoit, Michel Georges André
(86) Numéro de dépôt international: PCT/FR2001/001688
(87) Numéro de publication internationale: WO 2001/094150

(56) Documents cités:
- EP-A- 0 112 795
- WO-A-95/34443
- DE-U- 29 622 755
- FR-A- 2 305 315
- FR-A- 2 702 183
- US-A- 2 709 105

## Description

L'invention est relative à un tapis de protection et/ou de décoration, notamment destiné à équiper un véhicule automobile

selon l'état le plus proche décrit dans le document FR 2 702 183 A.

Dans ce domaine, bien que les constructions automobiles recouvrent le plancher des véhicules d'une moquette plus ou moins résistante, l'automobiliste a recours traditionnellement à l'achat de tapis complémentaires de protection et/ou de décoration. Ces tapis sont, selon les cas, plus ou moins adaptés à la configuration du plancher du véhicule, et recouvrent ceux disposés en première monte.

De tels tapis sont généralement constitués de pièces de moquettes découpées selon un contour prédéterminé, et surjeté. De même, le plancher du véhicule est par construction recouvert généralement d'une moquette plus ou moins étoffée.

C'est alors que l'on rencontre un inconvénient inhérent à la superposition du tapis sur le plancher du véhicule. En effet, il est courant, lorsque l'on dispose un tapis sur une autre zone de même type, que le tapis recouvrant glisse sur le tapis d'origine, ce qui provoque d'une part des interstices dans lesquels vont s'accumuler les poussières et cailloux, allant d'autre part jusqu'à gêner le bon fonctionnement des pédales de commande du véhicule.

Pour pallier ces inconvénients, on connaît divers dispositifs d'accrochage ou d'agrafage, constitués par des systèmes à vis traversant le tapis et la moquette du véhicule ou encore des systèmes à crochets agrippant d'une part la face interne du tapis et d'autre part la face externe du plancher à équiper.

Cependant, de tels dispositifs engendrent une détérioration du plancher du véhicule, du fait des accrochages nécessaires, ce qui rebute un grand nombre d'utilisateurs. En outre, la liaison est ponctuelle et s'avère à la longue peu efficace, compte tenu des efforts engendrés par l'utilisateur.

On connaît également la réalisation de tapis préformés, se présentant sous une forme de cuvette adaptée au plancher à équiper. Si le maintien en place de tels tapis préformés est plus efficace, de telles réalisations sont pénalisées par un coût de revient plus important et par la nécessité d'une surface de stockage plus importante compte tenu du volume des tapis.

D'autres solutions ont été également envisagées pour tenter de bloquer le tapis sur son plan de pose, en utilisant diverses préformes rigides, dans le but de bloquer le tapis au niveau de son contour. Néanmoins, de tels dispositifs connaissent une certaine efficacité transversale, mais l'on retrouve un glissement longitudinal, notamment au niveau du conducteur compte tenu du mouvement de ses pieds.

Le but de la présente invention est de proposer un tapis de protection et/ou de décoration, notamment destiné à équiper un véhicule, qui permet de pallier les inconvénients précités tout en autorisant un bon maintien, sans glissement, du tapis sur son plan de pose.

Un autre but de la présente invention est de proposer un procédé de fabrication d'un tel tapis de protection et/ou de décoration qui soit tout à fait en harmonie avec les conditions de fabrication industrielle, et en particulier de fabrication en ligne.

Un autre but de la présente invention est de proposer un tapis de protection et/ou de décoration qui garde les avantages des tapis plats non rigides tout en solutionnant l'inconvénient dû au glissement.

Un autre but de la présente invention est de proposer un tapis de protection et/ou de décoration ainsi qu'un procédé de fabrication, qui restent économiques afin de ne pas pénaliser le coût du produit final, et qui soient d'une mise en oeuvre facile, tant pour la fabrication pour que l'utilisation.

D'autres buts et avantages de la présente invention apparaîtront au cours de la description qui va suivre, qui n'est cependant donnée qu'à titre indicatif, et qui n'a pas pour but de la limiter.

Selon l'invention, le tapis de protection et/ou de décoration, notamment destiné à équiper un véhicule, constitué par une structure multicouche présentant une face supérieure, notamment recouverte d'un revêtement textile, et une face inférieure, destinée à être placée en contact avec le plan de pose du tapis, est caractérisé par le fait que ladite face inférieure comporte une couche de matière sous la forme d'un maillage, recouvrant, en tout ou partie, ladite structure multicouche et présentant un coefficient de frottement élevé.

Le procédé de fabrication du tapis de protection et/ou de décoration, selon l'invention, est caractérisé par le fait que :
- on superpose une feuille support recouverte notamment d'un revêtement textile, et une couche de matière présentant un coefficient de frottement élevé,
- on découpe simultanément lesdites feuille support et couche de matière, selon le contour du tapis à obtenir.

La présente invention sera mieux comprise à la lecture de la description suivante accompagnée des dessins en annexe parmi lesquels :
- la figure 1 montre une vue schématique de face d'un tapis selon la présente invention,
- la figure 2 montre une vue de dessous du tapis représenté à la figure 1,
- la figure 3 montre une vue en coupe partielle du tapis selon l'axe III-III de la figure 1,
- la figure 4 illustre schématiquement le procédé de fabrication du tapis selon l'invention.

La présente invention concerne un tapis de protection et/ou de décoration, notamment destiné à équiper un véhicule automobile.

Bien que plus particulièrement développée dans ce cadre, la présente invention n'est toutefois pas limitée à ce domaine, et pourra tout à fait s'appliquer plus généralement dans tous les domaines où l'on sera confronté à la superposition de deux tapis selon les mêmes critères.

Comme le suggèrent les figures, le tapis 1 de protection et/ou décoration est du type tapis plat souple de façon à pouvoir être présenté à la vente dans un minimum de volume, et pouvoir s'adapter aux différentes variantes du plancher du véhicule. Toutefois, il est d'ores et déjà à remarquer que la présente invention pourrait tout à fait s'appliquer dans le cadre d'un tapis rigide, voire du type préformé.

De même, le contour du tapis illustré sur les figures n'est en aucun cas limitatif, et la présente invention peut s'adapter à toutes formes de tapis, qu'il s'agisse du tapis pour le conducteur, du tapis pour le passager avant, ou des tapis destinés à équiper l'arrière du véhicule.

Enfin, l'application du véhicule ne doit être prise aucun cas comme une application limitative, et l'invention pourrait s'appliquer à tous types de tapis domestiques par exemple.

Cela étant, le tapis 1 est constitué par une structure multicouche 2 présentant une face supérieure 3 et une face inférieure 4.

Par face supérieure 3, on entend la face qui va être destinée à l'utilisation pour ladite protection et/ou décoration. Dans le cas d'un véhicule automobile, c'est cette face supérieure qui sera soumise aux différents piétinements des utilisateurs.

Cette face supérieure 3 est constituée, de manière connue, par une feuille support 5, par exemple en matière synthétique ou fibreuse, recouverte notamment d'un revêtement textile, tel que notamment un velours ou un élément aiguilleté ou tufté.

Par ailleurs, par face inférieure 4, on entend la face destinée à être placée en contact avec le plan de pose du tapis, qui dans le cas du véhicule automobile, sera notamment constituée par le plancher notamment recouvert de sa moquette.

Selon la présente invention, cette face inférieure 4 comporte une couche de matière 6 présentant sous la forme d'un maillage, recouvrant, en tout ou partie, ladite structure multicouche et un coefficient de frottement élevé.

Ainsi, grâce à la présence de cette couche, il y aura une parfaite adhérence du tapis de protection et/ou de décoration sur le plan de pose, quelle que soit la nature de ce dernier. Le fort coefficient de frottement évitera le glissement relatif des deux faces en vis-à-vis, sans toutefois engendrer de détériorations quelconques du plan de pose ou de salissures de collage de ce dernier.

Ladite couche 6 constituant la face inférieure de la structure multicouche 2 se présente sous la forme d'une feuille recouvrant, en tout ou partie, ladite structure multicouche.

Par tout ou partie, il faut comprendre que ladite couche 6 de la face inférieure présente une surface correspondant à celle de la feuille support 5 de la face supérieure, ou une surface inférieure. Néanmoins, pour obtenir de bons résultats, un pourcentage de 75 % au moins s'avère avantageux.

Ledit maillage peut être constitué par un filet ou similaire. En effet, dans une autre variante, ladite couche 6 peut se présenter sous la forme d'une ou plusieurs zones, indépendantes ou non liées les unes aux autres, telle que par exemple un ensemble de plots ou autres éléments, plus ou moins espacés et répartis, prévus, directement ou indirectement, au niveau de ladite face inférieure 4, sous la feuille support 5, ces plots ou éléments présentant ledit coefficient de frottement élevé requis.

Cela étant, ladite couche de matière 6 à coefficient de frottement élevé est constituée à base de latex, caoutchouc ou similaire, naturel ou synthétique. Ces matières présentent des propriétés de frottement élevé et engendrant une adhérence importante, sans pour autant être collante au sens propre du terme.

Ladite couche de matière 6 pourra aussi être, par exemple, constituée à partir de colle dite repositionnable, c'est-à-dire de matière adhérente présentant une forte résistance à un effort de traction tangent à son plan d'application et une faible résistance à un effort de traction perpendiculaire à son plan d'application. Une telle matière, connue par ailleurs, présentera l'avantage de ne pas se déposer sur le plancher du véhicule lorsque le tapis de protection et/ou de décoration y sera placé.

Bien naturellement, les dispositions décrites précédemment peuvent être combinées entre elles, et par exemple ledit maillage pourra être constitué à partir de fils de latex, ou encore de fils textiles enduits d'une colle dite repositionnable. De même, ladite couche de matière 6 pourra être par exemple constituée d'une enduction totale ou partielle de la face inférieure du support 5 de latex ou similaire ou de colle repositionnable.

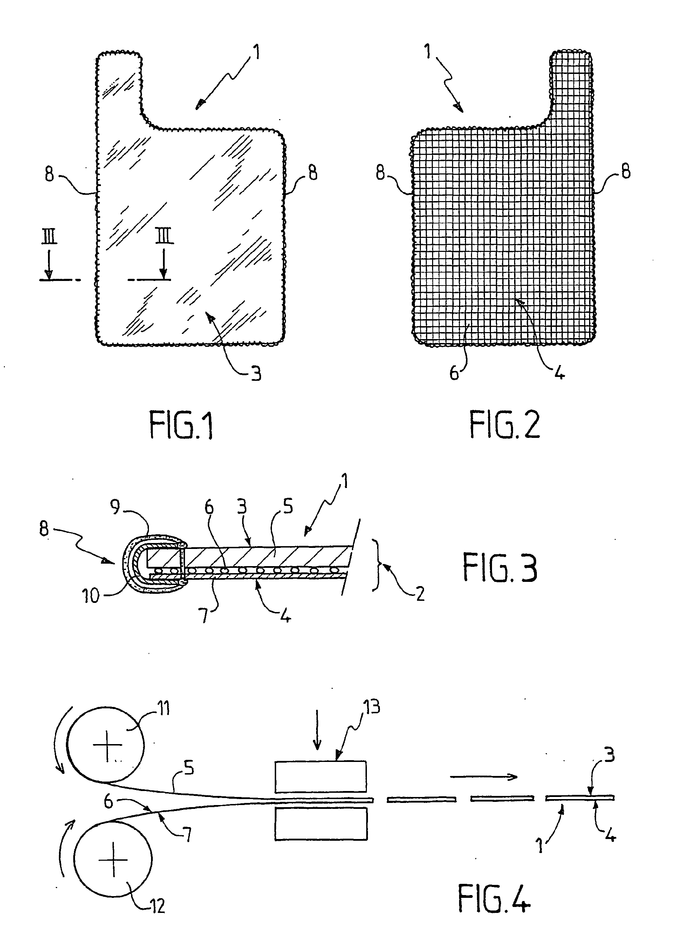

Selon une autre caractéristique avantageuse de la présente invention, ladite couche 6 à base de latex, caoutchouc, similaire ou autre est équipée, comme le montre particulièrement la figure 3, préalablement à l'utilisation du tapis 1, par un film 7 de protection. Ce dernier présentera les avantages inhérents à de tels films de protection, mais facilitera également la fabrication du tapis, tel que cela apparaîtra dans la suite de la description.

Selon une autre caractéristique avantageuse de la présente invention, la lisière 8 du tapis 1 est équipée d'un surjet 9 et/ou d'une ganse 10 périphérique de finition de tapis et de blocage de ladite couche de matière 6 présentant un coefficient de frottement élevé et/ou dudit film de protection 7.

Ainsi, ladite feuille support 5, couche 6 et film 7 présentant des contours identiques, et la réalisation dudit surjet 9 constitue, comme il le sera développé ultérieurement, des moyens de solidarisation des trois éléments ensemble notamment.

De même, la lisière 8 du tapis pourra être équipée de la ganse périphérique 10 venant enserrer, à ce niveau, la feuille support 5, ladite couche 6 et le film 7 et solidariser ces trois éléments.

En outre, selon une alternative, la ganse 10 pourra être recouverte par ledit surjet périphérique 9, ce qui permettra d'augmenter la qualité de la finition de la lisière et renforcer sa résistance.

Une autre fonction de la ganse sera également de bloquer la périphérie de ladite couche 6, et dans le cas d'un maillage notamment, d'éviter que les différents brins de ce dernier ne traversent le surjet.

S'agissant dudit maillage constituant la couche 6 à base de latex, caoutchouc ou similaire, naturel ou synthétique, il sera avantageusement constitué par des brins d'un diamètre compris entre 0,5 mm et 2 mm espacés entre eux d'un pas allant de 5 mm à 30 mm, selon une maille carrée ou rectangulaire notamment.

Ce maillage constitue un filet souple et mou qui ne présente pas de tenue en lui même. C'est ainsi qu'il sera avantageusement disposé préalablement sur ledit film 7 de protection, constitué lui même par exemple par une feuille plastique PVC ou autre conférant à l'ensemble une rigidité certaine nécessaire à sa manutention et à sa mise en oeuvre.

A ce sujet, à la figure 4 est illustré schématiquement un procédé de fabrication du tapis selon la présente invention, autorisant une fabrication notamment en ligne. On dispose une bobine 11 formée par enroulement de ladite feuille support 5, recouverte notamment d'un revêtement textile, tel que par exemple un velours ou un élément aiguilleté ou tufté.

On dispose également une bobine 12 formée par l'enroulement de ladite couche 6 de matière présentant un coefficient élevé, préalablement couché sur ledit film 7 de protection.

On superpose alors la feuille support 5 et ladite couche 6, notamment prévues sur le film de protection 7, et on rapproche les différents éléments de façon à mettre en contact la feuille support 5 et ladite couche 6.

Ensuite, on découpe simultanément lesdites feuille support 5 et couche de matière 6, selon le contour du tapis à obtenir, notamment au niveau d'un poste de découpe, connu en soi, repéré 13 à la figure 4.

A l'issue de l'opération de découpe, on solidarise lesdites feuille support 5, couche de matière 6 et film de protection 7 par un surjet périphérique 9, tel que décrit précédemment en regard de la figure 3.

Il est à ce sujet à noter que le nombre de points du surjet sera avantageusement adapté pour perforer ledit film de protection 7 en vue de son arrachage préalablement à l'utilisation du tapis 1. De même, il sera recherché un compromis entre ce nombre de points et l'épaisseur du film 7 afin de faciliter cet arrachage périphérique.

Selon le mode de réalisation satisfaisant, on a obtenu de bons résultats avec un nombre de points de surjet compris entre 3 à 6 par centimètre avec une feuille 7 de plastique PVC d'une épaisseur minimum de 50 µm.

Naturellement, d'autres modes de réalisation de la présente invention, à la portée de l'homme de l'art, auraient pu être envisagés, sans pour autant sortir du cadre de celle-ci.

## Revendications

1. Tapis (1) de protection et/ou de décoration, notamment destiné à équiper un véhicule, constitué par une structure multicouche (2) présentant une face supérieure (3), notamment recouverte d'un revêtement textile, et une face inférieure (4), destinée à être placée en contact avec le plan de pose du tapis, **caractérisé par le fait que** la face inférieure (4) comporte une couche de matière (6), sous la forme d'un maillage, recouvrant, en tout ou partie, ladite structure multicouche (2) et présentant un coefficient de frottement élevé.

2. Tapis, selon la revendication 1, dans lequel ladite couche (6) de la face inférieure est constituée à base de latex, caoutchouc ou similaire, naturel ou synthétique, voire de colle dite repositionnable.

3. Tapis, selon la revendication 1, dans lequel ladite couche (6) de la face inférieure est équipée, préalablement à l'utilisation du tapis, par un film de protection (7).

4. Tapis, selon la revendication 3, dans lequel la lisière (8) du tapis (1) est équipée d'un surjet (9) et/ou ganse (10) périphérique de finition du tapis et de blocage de ladite couche de matière (6) et/ou du film de protection (7).

5. Tapis, selon la revendication 4, dans lequel la lisière (8) du tapis (1) est équipée d'une ganse périphérique (10), apte à être recouverte par ledit surjet (9) périphérique.

6. Procédé de fabrication d'un tapis de protection et/ou de décoration, constitué par une structure multicouche (2) présentant au moins une feuille support (5) notamment recouverte d'un revêtement textile, selon la revendication 1, **caractérisé par le fait que** :
- on superpose ladite feuille support (5) et une couche de matière (6) présentant un coefficient de frottement élevé,
- on découpe simultanément lesdites feuille support (5) et couche de matière (6) selon le contour du tapis à obtenir.

7. Procédé selon la revendication 6, dans lequel, lors de ladite superposition, ladite couche de matière (6) est prévue sur un film de protection (7).

8. Procédé selon la revendication 7, dans lequel on solidarise lesdites feuille support (5), couche de matière (6), et film de protection (7), par un surjet (9) périphérique, dont le nombre de points est adapté pour perforer ledit film de protection en vue de son arrachage préalablement à l'utilisation du tapis.

## Claims

1. A protective and/or decorative mat (1), in particular intended for fitting a vehicle, formed by a multilayer structure (2) exhibiting an upper face (3), notably covered with a textile coating, and a lower face (4), intended for being placed in contact with the laying plane of the mat, **characterised in that** the lower face (4) includes a layer of matter (6), in the form of a meshing, covering, in all or in part, said multilayer structure (2) and exhibiting high friction coefficient.

2. A mat according to claim 1, wherein said layer (6) of the lower face is based on latex, rubber or similar, natural or synthetic, possibly so-called repositionable glue.

3. A mat according to claim 1, wherein said layer (6) of the lower face is fitted, prior to using the mat, with a protective film (7).

4. A mat according to claim 3, wherein said edge (8) of the mat (1) is fitted with a peripheral overcast (9) and/or lug (10) for finishing the mat and blocking said layer of matter (6) and/or of the protective film (7).

5. A mat according to claim 4, wherein said edge (8) of the mat (1) is fitted with a peripheral overcast (10), capable of being covered with said peripheral overcast (9).

6. A method for manufacturing a protective and/or decorative mat, formed by a multilayer structure (2) exhibiting at least one supporting sheet (5) notably covered with a textile coating, according to claim 1, **characterised in that**:
- said supporting sheet (5) and a layer of matter (6) with high friction coefficient are superimposed,
- said supporting sheet (5) and layer of matter (6) are cut simultaneously along the contour of the mat to be obtained.

7. A method according to claim 6, wherein during said superimposition, said layer of matter (6) is provided on a protective film (7).

8. A method according to claim 7, wherein said supporting sheet (5), layer of matter (6) and protective film (7) are interconnected by a peripheral overcast (9), whereof the number of stitches is adapted in order to perforate said protective film with a view to being torn off before using the mat.

## Patentansprüche

1. Matte (1) zum Schutz und/oder zur Dekoration, insbesondere vorgesehen, um ein Fahrzeug auszustatten, die durch ein mehrschichtiges Gefüge (2) gebildet ist, aufweisend eine obere Seite (3), die insbesondere mit einer Textildeckschicht überzogen ist, und eine untere Seite (4), vorgesehen, um mit der Aufliegeebene der Matte in Berührung gebracht zu werden, **dadurch gekennzeichnet, daß** die untere Seite (4) eine netzartige Stoffschicht (6) umfaßt, die gänzlich oder teilweise das besagte mehrschichtige Gefüge (2) bedeckt und einen hohen Reibungskoeffizienten aufweist.

2. Matte nach Anspruch 1, bei der die besagte Schicht (6) der unteren Seite aus natürlichem oder synthetischem Latex, Gummi oder dergleichen, sogar aus einem als repositionierbar bezeichneten Klebstoff besteht.

3. Matte nach Anspruch 1, bei der die besagte Schicht (6) der unteren Seite vor der Benutzung der Matte mit einem Schutzfilm (7) versehen ist.

4. Matte nach Anspruch 3, bei der der Randbereich (8) der Matte (1) mit einer überwendlichen Umkreisnaht (9) und/oder -borte (10) zur endgültigen Fertigstellung der Matte und zur Arretierung der besagten Stoffschicht (6) und/oder des Schutzfilms (7) ausgestattet ist.

5. Matte nach Anspruch 4, bei der der Randbereich (8) der Matte (1) mit einer Umkreisborte (10) versehen ist, geeignet, von der besagten überwendlichen Umkreisnaht (9) bedeckt zu werden.

6. Verfahren zur Herstellung einer Schutz- und/oder Dekormatte, die durch ein mehrschichtiges Gefüge (2) gebildet ist, aufweisend wenigstens eine Trägerfolie, die insbesondere mit einer Textildeckschicht nach Anspruch 1 überzogen ist, **dadurch gekennzeichnet, daß**:
- die besagte Trägerfolie (5) und eine Stoffschicht (6), die einen hohen Reibungskoeffizienten aufweist, übereinander gelegt werden.
- die besagte Trägerfolie (5) und die besagte Stoffschicht (6) nach dem Umriß der zu erhaltenden Matte gleichzeitig geschnitten werden.

7. Verfahren nach Anspruch 6, bei dem während der besagten Überlagerung die besagte Stoffschicht (6) auf einem Schutzfilm (7) vorgesehen ist.

8. Verfahren nach Anspruch 7, bei dem die besagte Trägerfolie (5), die besagte Stoffschicht (6) und der besagte Schutzfilm (7) durch eine überwendliche Umkreisnaht (9) fest verbunden werden, deren Anzahl der Stiche angepaßt ist, um den besagten Schutzfilm angesichts seiner Abtrennung vor der Benutzung der Matte durchzustechen.
